Europäisches Patentamt

European Patent Office

Office européen des brevets

(19)

(11) Veröffentlichungsnummer: **0 419 884 A1**

# (12) EUROPÄISCHE PATENTANMELDUNG

(21) Anmeldenummer: 90116770.0

(22) Anmeldetag: 31.08.90

(51) Int. Cl.⁵: **B60H 1/00**

(30) Priorität: 28.09.89 EP 89117939
27.08.90 EP 90116411

(43) Veröffentlichungstag der Anmeldung:
03.04.91 Patentblatt 91/14

(84) Benannte Vertragsstaaten:
**DE ES FR IT**

(71) Anmelder: **Siemens Aktiengesellschaft**
Wittelsbacherplatz 2
W-8000 München 2(DE)

(72) Erfinder: **Hartleb, Thomas, Dipl.-Ing.(FH)**
**Kleinwalburer Strasse 13**
**W-8638 Meeder(DE)**
Erfinder: **Müller, Otto, Dipl.-Ing.(FH)**
**Ziegelhüttenweg 130**
**W-8601 Sesslach(DE)**

(54) **Heiz- bzw. Klimaanlage, insbesondere für ein Kraftfahrzeug, mit luftseitiger Innenraumtemperatur-Regelung.**

(57) Um bei einer Heiz- bzw. Klimaanlage mit durch Verstellen einer Hischluftklappe (MKI) einstellbarer Ausblastemperatur (TAL) einer aus einem Hischraum (MR) durch Luftkanäle in den Innenraum austretenden Luftströmung und einem ersten Regelkreis (I) mit einem die Hischluftklappe (MKI) in Abhängigkeit von einem Innenraumtemperatur-Sollwertgeber (SWI) und einem Innentemperatur-Istwertgeber (IWI) einstellenden ersten Regler (RI) eine weitgehende Unabhängigkeit von Luftmengen- und Wärmetauscher-Wasserdurchsatzschwankungen erreichen zu können, ist erfindungsgemäß ein dem ersten Regelkreis I unterlagerter zweiter Regelkreis II mit einem zweiten Regler (RII) in der Regelstrecke zwischen dem ersten Regler (RI) und der Hischluftklappe (MKI) vorgesehen, der in Einstellabhängigkeit von dem Ausblastemperatur-Sollwert (TAS) des ersten Reglers (RI) und dem Ausblastemperatur-Istwert (TAI) zumindest eines AusblastemperaturIstwertgebers (IWII) geführt ist.

FIG 1

FIG 2

EP 0 419 884 A1

# HEIZ- BZW. KLIMAANLAGE, INSBESONDERE FÜR EIN KRAFTFAHRZEUG, MIT LUFTSEITIGER INNENRAUMTEMPERATUR-REGELUNG

Die Erfindung bezieht sich auf eine Heiz- bzw. Klimaanlage, insbesondere für ein Kraftfahrzeug, mit luftseitiger Innenraumtemperatur-Regelung gemäß Oberbegriff des Anspruchs 1; eine derartige Heiz- bzw. Klimaanlage ist aus der DE-A1-35 26 518 bekannt.

Im bekannten vorgenannten Fall wird der Öffnungsgrad der Mischluftklappe automatisch gesteuert, um die Innenraumtemperatur auf einen vorbestimmten Sollwert unter Berücksichtigung zugeführter Informationen wie Innenraumtemperatur, Außenlufttemperatur, Einstelltemperatur usw. zu halten, wobei der Fahrer jede gewünschte Raumtemperatur durch Einstellen an einem Bediengerät von Hand wählen kann. Als Istwert wird der Regelung die jeweilige Fahrgastraumtemperatur von einem Innenraumtemperaturfühler gemeldet.

Bei Heiz- bzw. Klimaanlagen der vorbeschriebenen bekannten Art ändert sich bei einer festen Vorgabe des Temperatur-Sollwertes für den Innenraum des Kraftfahrzeuges die Ausblastemperatur bis zu 15° in Abhängigkeit vom unterschiedlichen Wasserdurchsatz durch den Wärmetauscher sowie der Temperatur und der Menge der jeweils angesaugten und durch die Heiz- bzw. Klimaanlage geförderten Luft. Aufgrund der relativ großen Zeitkonstanten der bekannten Innenraumtemperaturregelung können die aufgrund der vorbeschriebenen Schwankungen bedingten Komfortverschlechterungen allenfalls bis zu einem gewissen Grade abgeschwächt werden, wirken aber trotzdem für die Fahrgäste noch sehr störend.

Eine wesentlich weitergehende und nicht mehr komfortmindernde Unabhängigkeit von Luftmengenschwankungen und Wasserdurchsatzschwankungen im Wärmetauscher kann erfindungsgemäß bei einer Heiz- bzw. Klimaanlage der eingangs genannten Art durch einen dem ersten Regelkreis unterlagerten zweiten Regelkreis mit einem in der Regelstrecke zwischen dem ersten Regler und der Mischluftklappe bzw. der Mischluftklappenbetätigung vorgesehenen, in Abhängigkeit von dem Ausblastemperatur-Sollwert des ersten Reglers und zumindest einem Ausblastemperatur-Istwert eines Ausblastemperaturistwertgebers geführten zweiten Regler erreicht werden.

Die Regelung der erfindungsgemäßen Heiz- bzw. Klimaanlage besteht also aus zwei kaskadierten Regelkreisen. Der erste Regelkreis dient zum Regeln der Fahrzeuginnentemperatur gemäß einem oder mehrerer Sollwerte; der Istwert ergibt sich aus einem oder mehreren Innenraumtemperatur-Sensoren. Der Regelkreis ist in seinem Zeitverhalten zweckmäßigerweise so ausgelegt, daß er die innenraumtemperatur durch Ändern des Ausblastemperatur-Sollwertes entsprechend dem eingestellten Innenraumtemperatur-Sollwert einstellt und konstant hält. Der zweite, dem ersten Regelkreis unterlagerte Regelkreis regelt die Ausblastemperatur gemäß dem von der vorgenannten Innenraumtemperatur-Regelung als Regelausgangsgröße vorgegebenem Sollwert für die Ausblastemperatur. Der Istwert des zweiten unterlagerten Regelkreises ergibt sich aus einem oder mehreren Ausblastemperatur-Sensoren. Das Zeitverhalten des zweiten unterlagerten Regelkreises ist zweckmäßigerweise so abgestimmt, daß schnelle Änderungen der Ausblastemperatur, bedingt durch Änderung der Fahrgeschwindigkeit, der geförderten Luftmenge, der Wassertemperatur, der Wasserdurchsatzmenge im Wärmetauscher usw. verhindert bzw. unmerklich schnell ausgeregelt werden.

Die Erfindung wird im folgenden anhand eines schematisch dargestellten Ausführungsbeispiels in der Zeichnung näher erläutert. Darin zeigen:

FIG 1 den Gesamt-Regelkreis zu einer Heiz- bzw. Klimaanlage gemäß FIG 2,

FIG 2 in einem schematischen Längsschnitt eines Kraftfahrzeuges eine erfindungsgemäße - Heiz- bzw. Klimaanlage mit den zugehörigen Sollwert- und Istwertgebern,

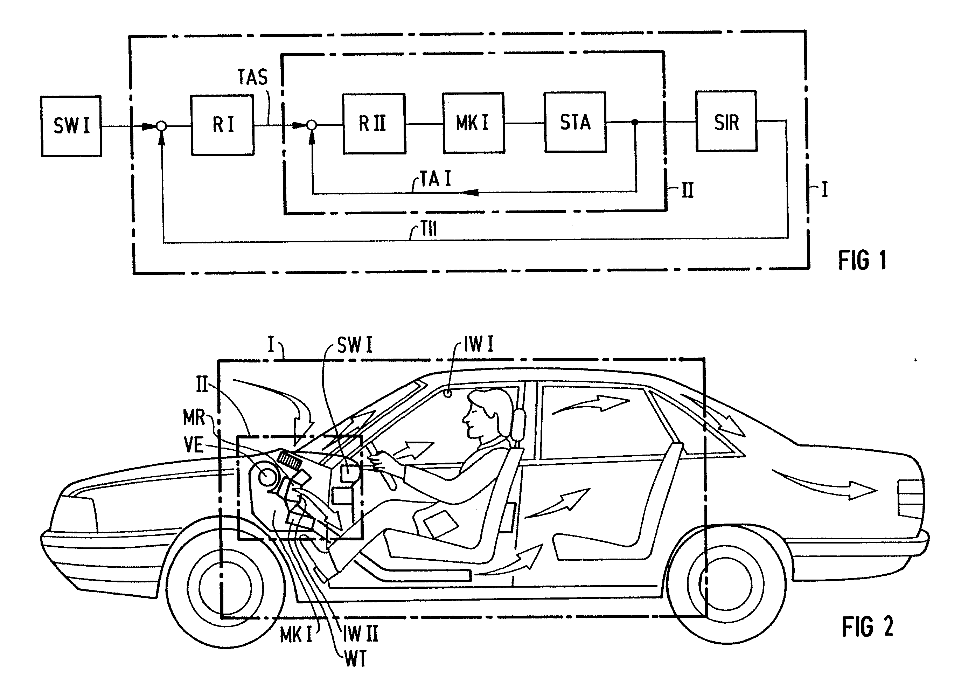

An der Spritzwand eines in FIG 2 dargestellten Kraftfahrzeuges ist ein Heiz- bzw. Klimagerät installiert, das durch einen Ventilator VE Außenluft bzw. Umluft ansaugt und je nach Stellung einer Mischluftklappe MKI mit unterschiedlichen Anteilen direkt als Kaltluft oder über einen Wärmetauscher WT mit Warmluft bzw. mit Warmluftanteil in einen Mischraum MR fördert, aus dem die derart gemischte Luft mit einem bestimmten Ausblastemperatur-Istwert TAI über einen oder mehrere Luftkanäle, z.B. zur Scheibenebene, und/oder zur Armaturenbrett-Mittelebene und/oder zur Fußraumebene in den Innenraum des Fahrzeuges eingeblasen wird.

Vom Fahrer bzw. von den Fahrgästen kann an zumindest einem Innentemperatursollwertgeber SWI ein Innentemperatur-Sollwert TIS der InnentemperaturRegeleinrichtung vorgegeben werden. Der jeweilige Innentemperatur-Istwert TII wird von einem Innentemperaturistwertgeber TWT erfaßt; der jeweilige Ausblastemperatur-Istwert TAI wird von einem Ausblastemperatur-Istwertgeber IWII gemessen, der im Mischraum - im vorliegenden Beispiel in Nähe des zur Frontscheibenebene führenden DefrostLuftkanals - angeordnet ist.

FIG 1 zeigt den Gesamtregelkreis der Heiz- bzw. Klimaanlage gemäß FIG 2 mit einem ersten Regelkreis 1 und einem diesem unterlagerten Regelkreis II.

Gemäß dem ersten Regelkreis 1 wird der von einem Innentemperatur-Sollwertgeber SW1, z.B. einem am Armaturenbrett installierten Bediengerät, vorgegebene Innentemperatur-Sollwert an einen ersten Regler RI gegeben, der einen entsprechenden Ausblas temperatur-Sollwert TAS berechnet und an den unterlagerten zweiten Regler II für die Ausblastemperatur gibt. Der zweite Regler II regelt dann durch Einstellen der Mischluftklappe MKI im Mischraum MR ein entsprechendes ≪verhältnis von Kaltluftanteil bzw. Warmluftanteil für die in die Ausblastemperaturstrecke STA eintretenden Luft. In der Innentemperaturstrecke SIR wird dann über den Innentemperaturistwertgeber IWI der Innentemperatur-Istwert TII erfaßt und zum Eingang des ersten Reglers RI rückgeführt, derart daß nach einem Vergleich von Innentemperatur-Sollwert TIS und Innentemperaturistwert TII die entsprechende Regeldifferenz an den Eingang des ersten Reglers RI weitergegeben wird.

Der zweite schnellere Regelkreis II ist dem ersten Regelkreis 1 dann derart untergeordnet, daß er in der Regelstrecke zwischen dem ersten Regler RI und dem Stellglied für die Mischluftklappe MKI angeordnet ist, wobei an seinem Eingang eine Regeldifferenz ansteht, die sich aus einem Vergleich des AusblastemperaturSollwertes TAS am Ausgang des ersten Reglers RI mit dem von dem Ausblastemperatur-Istwertgeber IWII in der Ausblastemperaturstrecke STA gelieferten Ausblastemperatur-Istwert TA1 ergibt.

## Ansprüche

1. Heiz- bzw. Klimaanlage, insbesondere für ein Kraftfahrzeug mit luftseitiger Innenraumtemperatur-Regelung über einen ersten Regelkreis (1) mit zumindest einer von einem ersten Regler (RI) in Abhängigkeit von zumindest einem Innenraumtemperatur-Sollwertgeber (SW1) und zumindest einem Innenraumtemperatur-Istwertgeber (IW1) in einem Hischraum (MR) verstellbaren Mischluftklappe (MKI) zur Einstellung eines Warmluft- bzw. Kaltluftanteils zumindest eines aus dem Mischraum (MR) mit entsprechender Ausblastemperatur (TA) austretenden Luftstroms, **gekennzeichnet** durch einen dem ersten Regelkreis (1) unterlagerten zweiten Regelkreis (II) mit einem in der Regelstreecke zwischen dem ersten Regler (RI) und der Mischluftklappe (MKI) vorgesehenen, in Abhängigkeit von dem Ausblastemperatur-Sollwert (TAS) des ersten Reglers (RI) und dem Ausblastemperatur-Istwert (TA1) zumindest einem Ausblastemperatur-Istwertgeber (IWII) geführten zweiten Reglers (RII).

2. Heiz- bzw. Klimaanlage nach Anspruch 1, **gekennzeichnet** durch einen ersten Regelkreis 1 im Sinne einer Einstellung bzw. Konstanthaltung der Innenraumtemperatur entsprechend dem Innenraumtemperatur-Sollwertgeber (swz) durch Vorgabe eines Ausblastemperatur-Sollwertes (TAS).

3. Heiz- bzw. Klimaanlage nach Anspruch 1 oder 2, **gekennzeichnet** durch einen zweiten Regelkreis II im Sinne einer Einstellung bzw. Konstanthaltung der Ausblastemperatur (TAI) entsprechend dem jeweiligen AusblastemperaturSollwert (TAS) am Ausgang des ersten Reglers (RI).

4. Heiz- bzw. Klimaanlage mit mehreren, voneinander unabhängigen Kühl- bzw. Heizzonen je Innenraum nach einem der Ansprüche 1 bis 3, **dadurch gekennzeichnet**, daß je Zone jeweils ein erster bzw. zweiter Regelkreis (I bzw.II) ,gemäß Anspruch 1 bis 3 vorgesehen ist.

TAS

SW I — R I — R II — MK I — STA — SIR

TA I

II

I

T II

**FIG 1**

I
SW I
IW I
II
MR
VE
MK I
IW II
WT

**FIG 2**

EP 0 419 884 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 608 525 (VALEO)<br>* Ansprüche 1-4, 9; Figuren 1, 3 * | 1-3 | B 60 H 1/00 |
| A | FR-A-2 447 520 (FERODO)<br>* Seite 6, Zeile 15 - Seite 8, Zeile 6; Figuren 1, 3 * | 1-3 | |
| A | EP-A-0 055 574 (MOTOROLA)<br>* Figuren 1, 4 * | 1-3 | |
| A | US-A-4 757 944 (HITACHI)<br>* Spalte 6, Zeile 11 - Spalte 7, Zeile 59; Figuren 4, 5 * | 1-4 | |
| A | ATZ AUTOMOBILTECHNISCHE ZEITSCHRIFT. vol. 82, no. 12, Dezember 1980, STUTTGART DE Seiten XX - XXIV; KLAUS BOELKE: "AUTOMATISCHE STEURUNG UND RE-GELUNG VON HEIZUNGS-,BELÜFTUNGS- UND KLIMAAN-LAGEN"<br>* Figuren 3, 7 * | 1-3 | |
| A | PATENT ABSTRACTS OF JAPAN vol. 8, no. 177 (M-317)(1614) 15 August 1984,<br>& JP-A-59 70218 (HITACHI) 20 April 1984,<br>* das ganze Dokument * | 1-3 | RECHERCHIERTE SACHGEBIETE (Int. Cl.5)<br><br>B 60 H |
| A | EP-A-0 021 353 (NIPPONDENSO)<br>* Figur 1 * | 1 | |
| A | DE-A-3 151 255 (BAYERISCHE MOTOREN WERKE)<br>* Figur 1 * | 1,4 | |
| A | DE-C-3 316 060 (SÜDDEUTSCHE KÜHLERFABRIK JULI-US FR. BEHR)<br>* Figuren 1, 2, 5 * | 1,2 | |

−/−

Der vorliegende Recherchenbericht wurde für alle Patentansprüche erstellt

| Recherchenort | Abschlußdatum der Recherche | Prüfer |
|---|---|---|
| Den Haag | 06 Dezember 90 | TSITSILONIS L. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3 526 518  (PORSCHE)<br>* Figuren 1, 4 *<br>– – – | 1 | |
| A | US-A-4 829 884  (HITACHI)<br>* Figuren 1, 3 *<br>– – – – – | 1 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| Den Haag | 06 Dezember 90 | TSITSILONIS L. |